# EUROPEAN PATENT APPLICATION

(11) **EP 0 607 734 A2**
(43) Date of publication of application: **27.07.1994**
(21) Application number: 93480225.7
(22) Date of filing: 15.12.1993
(51) Int. Cl.: H04N 5/76, H04N 5/782

(54) **Programming of a video cassetterecorder**

(30) Priority: 21.01.1993 US 6433
(71) Applicant: INTERNATIONAL BUSINESS MACHINES CORPORATION, Armonk, N.Y. 10504 (US)
(72) Inventor: Fitzpatrick, Greg P., Forth Worth, Texas 76137 (US); Williams, Marvin L., Lewisville, Texas 75067 (US)
(74) Representative: de Pena, Alain

(57) **Abstract**

A method and system for the automatic programming of a video cassette recorder utilizing a data processing system. Broadcast video signals are transmitted comprising video frames wherein at least some of the video frames include programming information. At least one video frame including programming information within a received broadcast video signal is selectively captured and stored with in a data processing system. The stored video frame is processed within the data processing system to extract the programming information. The programming information may be accessed to automatically program a video cassette recorder utilizing the data processing system.

## Description

The present invention relates in general to improved data processing systems and in particular to methods and systems for the automatic programming of a video cassette recorder utilizing a data processing system. Still more particularly, the present invention relates to methods and systems for selectively capturing and storing programming information included within broadcast video signals for subsequent utilization by a data processing system to automatically program a video cassette recorder.

The state-of-the-art is advancing very rapidly in broadcast video systems. For example, interactive television systems are now commonly described in technical bulletins and disclosures which permit the viewer to interact with the broadcast signal on several levels. For example, bilateral communication is possible with certain cable television systems which permits a user to transmit purchase orders, survey responses, or other information back to a central data gathering point. Additionally, broadcast television systems are now proposed which permit a user to impact the eventual outcome of a broadcast play or a game by selecting various options at multiple points within the story line, and thereafter incorporating those selections into the utilization of a particular broadcast selection.

Additionally, techniques are now commonly utilized which permit t he analog data representative of a frame of video image to be digitized and stored for subsequent utilization. This technique is commonly utilized to digitize images captured by a video camera for printing on articles of clothing or in more sophisticated systems for capturing information, such as stock market quotations, weather reports or other data for later utilization by the subscriber.

For example, Research Disclosure, January 198 9, No. 297 by Kenneth Mason Publications Limited, England, describes a so-called "frame grabber" which captures an image from a television broadcast signal approximately every four seconds, digitizes that captured image, and then scans the captured image to interpret the image data for use in internal character and number form. This particular system is focused on the utilization of a small portion of the bottom of the video frame and is described as particularly useful in capturing stock market quotations which are typically broadcast in that portion of the screen.

Video cassette recorders (VCR's) are also widely available. Many VCR's permit a user to record a selected program by requiring the user to manually enter a date, time, duration, and channel for the program utilizing a remote control device which then sends this programming information to the VCR utilizing infrared signals. Other VCR's may be programmed remotely via a telephone, or by a computer which is physically coupled to the VCR.

Instead of entering the date, time, duration, and channel separately for each selected program, one known system assigns a unique five digit number to each broadcast program. Each number, therefore, is associated with broadcast date, time, duration, and channel. A user is then permitted to program a VCR by entering a unique number for each selected program. In each of these situations, however, a user must still manually enter the necessary programming information.

It should therefore be apparent that a need exists for a method and system whereby programming information may be captured from a video broadcast signal, extracted and automatically accessed by a data processing system to automatically program a video cassette recorder.

It is therefore one object of the present invention to provide an improved data processing system.

It is another object of the present invention to provide an improved method and system for the automatic programming of a video cassette recorder utilizing a data processing system.

It is yet another object of the present invention to provide an improved method and system for selectively capturing and storing programming information included within broadcast video signals for subsequent utilization by a data processing system.

The foregoing objects are achieved as is now described. A method and system are disclosed for the automatic programming of a video cassette recorder utilizing a data processing system. Broadcast video signals are transmitted comprising video frames wherein at least some of the video frames include programming information. At least one video frame including programming information within a received broadcast video signal is selectively captured and stored within a data processing system. The stored video frame is processed within the data processing system to extract the programming information. The programming information may be accessed to automatically program a video cassette recorder utilizing the data processing system.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 is a partially schematic pictorial representation of a system which may be utilized to implement the method and system of the present invention;
Figure 2 is a high level block diagram illustrating various component subsystems of the system of Figure 1; and
Figure 3 is a high level logic flowchart illustrating the method of the present invention.

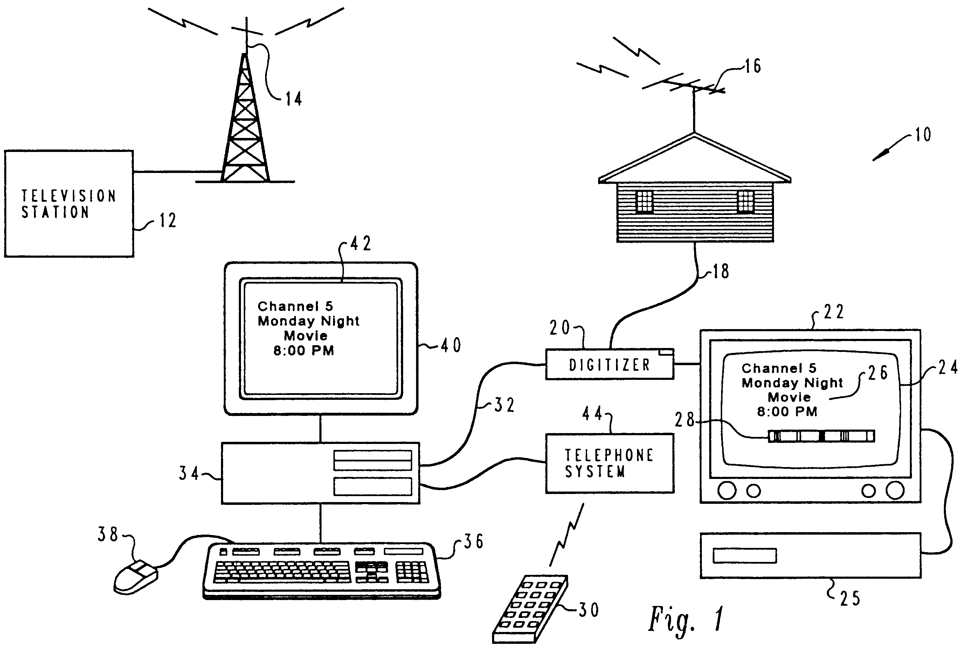

With reference now to the figures and in particular with reference to Figure 1, there is depicted a partially-schematic pictorial representation of a system 10 which may be utilized to implement the method of the present invention. As illustrated, system 10 includes a television station 12 which is utilized to broadcast a video signal which comprises a plurality of video frames, wherein at least certain of the plurality of video frames include visually perceptible data, such as programming information. The video signal is broadcast utilizing well known traditional technology via broadcast antenna 14 and is thereafter received at reception antenna 16. Up on reception of a broadcast video signal at reception antenna 16, the analog broadcast video signal is coupled via digitizer 20 to television receiver 22. Television receiver 22, in a manner well known in the art, then produces a series of video frames which are displayed in the manner depicted within video display 24. Video cassette recorder (VCR) 25 may be utilized to record any selected video frames.

As illustrated within Figure 1, video display 24 may include programming information 26, such as broadcast date, channel and time exposed as Arabic numerals or graphically, as barcode 28. Upon reference to the foregoing those skilled in the art will appreciate that the broadcasting of programming information, or other textual or numeric information is often accomplished utilizing television broadcast technology ; however, there has not in the past existed any method or system whereby this information could be captured and utilized to automatically program video cassette recorder 25 utilizing a data processing system.

In a manner which will be explained in greater detail herein, digitizer 20 may be utilized, upon the reception of an initiating command from remote control 30, to capture and store a digital representation of a video display frame, such as that disclosed at reference numeral 24 within Figure 1. The digital information representative of this video frame is then coupled, via cable 32 to data processing system 34. Data processing system 34 may be implemented, as those skilled in the art will appreciate, utilizing any so-called "personal" computer, such as the International Business Machines Corporation PS/2 personal computer.

Data processing system 34 preferably includes a keyboard 36 and a pointing device, such as mouse 38 which may be utilized, in a manner which will be explained in greater detail herein, to assist in the capturing and processing of programming information from broadcast video signals. Also coupled to data processing system 34 is display device 40 which includes a display screen 42 which may be utilized to display captured and processed programming information in the manner depicted.

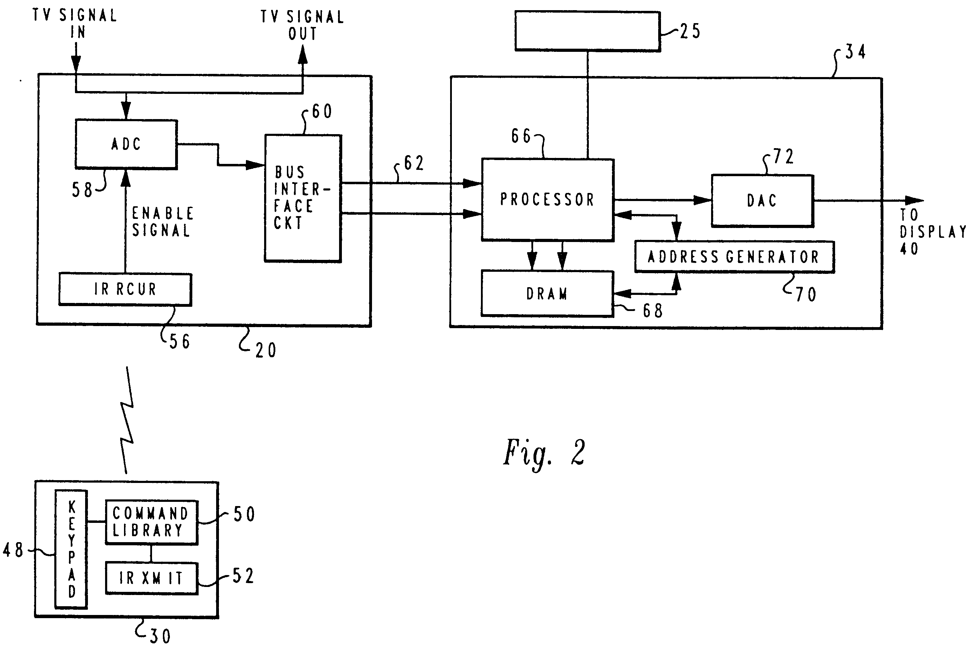

Referring now to Figure 2, there is depicted a high level block diagram illustrating various component subsystems of system 10 of Figure 1. As illustrated, remote control 30 preferably includes a keypad 48 which is utilized to access various commands within command library 50. Command library 50 is coupled to infrared transmitter 52 and may be utilized to initiate the transmittal of a coded infrared transmission suitable for actuating digitizer 20, in a manner similar to that utilized to select various command and control functions in a modern state-of-the-art remote control television set. Of course, those skilled in the art will appreciate that remote control 30 may also be implemented utilizing ultrasonic technology or radio frequency technology, as a matter of design choice.

Digitizer 20 is also depicted within Figure 2 and preferably includes an infrared receiver 56 capable of receiving transmitted commands from remote control 30. Infrared receiver 56 generates an ENABLE signal upon reception of an appropriate command from remote control 30 which is coupled to analog-to-digital converter 58. Analog-to-digital converter 58 is coupled to the television broad cast video signal which is received from reception antenna 16 (see Figure 1) and which is coupled through digitizer 20 to television receiver 22. After capturing a digital representation of a selected frame of the broadcast video signal, that information is coupled, via bus interface circuit 60 and bus 62 to processor 66 within data processing system 34.

Referring to the block diagram of the components of data processing system 34 within Figure 2, it may be seen that the digital representation of a particular frame of broadcast video signal may be stored by processor 66 within a memory component within data processing system 34. In the depicted embodiment of Figure 2, processor 66 preferably stores the digital representation of the broadcast video frame within Dynamic Random Access Memory (DRAM) 68. Address generator 70 is utilized to control the storage and retrieval of this information within memory 68, and may be utilized to repetitively retrieve the digital representation of the broad cast video signal frame stored within memory 68 and couple that representation to display 4 0 via digital-to-analog converter 72. In this manner, a "still" representation of a broadcast video frame may be repetitively displayed within display 40, permitting the user to visually access any data contained therein and edit and/or correct programming information within that frame of broadcast video signal which has been captured in a manner which will be explained in greater detail herein.

Processor 66 may physically coupled to a programmable VCR 25 utilizing an RS-232 type interface. In an alternate embodiment, those skilled in the art will understand that processor 66 may be coupled to VCR 25 through a program device (not shown) capable of generating programming commands necessary for programming VCR 25. For example, processor 66 may be physically coupled to an infrared device which then generates programming commands and transmits the commands to VCR 25 utilizing infrared signals.

Thus, when utilizing the method and system of the present invention, a user may remotely initiate the capturing of a frame of video data which includes programming information and may cause that frame of data to be stored for subsequent utilization. The captured frame of data, along with programming information which may have been extracted from that frame, may be recalled from memory 68 utilizing processor 66 in any manner acceptable within modern state---the-art data processing systems and utilized, in the novel manner set forth herein, to automatically program VCR 25.

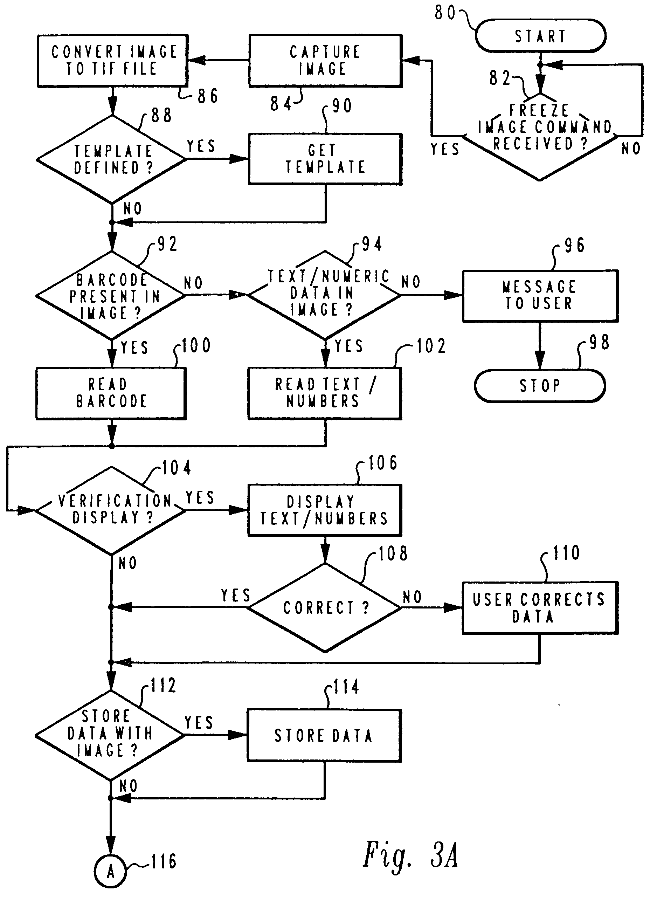

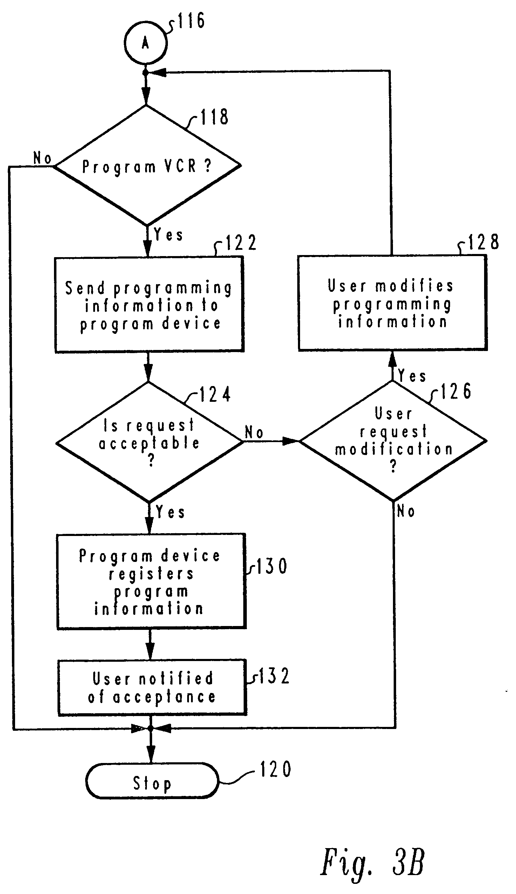

With reference now to Figure 3, there is depicted a high level logic flowchart which illustrates the method of the present invention. As depicted, t his process begins at block 80 and thereafter passes to block 82 which illustrates a determination of whether or not a freeze image command has been received by digitizer 20 from remote control 30. If not, the process merely iterates until such time as a freeze image command has been received. After receiving a freeze image command, as determined at block 82, the process passes to block 84. Block 84 illustrates the capturing and storing of a digital representation of at least on e video frame within a received broadcast video signal. Thereafter, that image is converted to a Tagged Image File Format (TIFF) or some other suitable image file format, and stored for future processing, as depicted at block 86.

Next, the process passes to block 88. Block 88 illustrates a determination of whether or not the user has defined a template for utilization in the extraction of textual or numeric data from the captured video frame described above . Those skilled in the art will appreciate that the user may define specific numeric templates, such as a template beginning "channel " which may be utilized to increase the efficiency of an optical character recognition process by further defining the programming information which is to be extracted from a video frame. Additionally, a specific barcode frame may also be defined and utilized, in a manner well know n to those skilled in the barcode reader art, to facilitate the scanning and extraction of barcodes from within a video frame in the captured portion of the broadcast video signal.

In the event a template has been defined by the user, the process passes to block 90 which illustrates the retrieval of that template from system memory. Thereafter, or in the event no template has been defined, the process passes to block 92. Block 92 illustrates a determination of whether or not a barcode is present within the captured video frame. If so, the process passes to block 100 which illustrates the reading of that barcode utilizing well known barcode scanning processes. Referring again to block 92 in the event no barcode is present within the captured video frame, the process passes to block 94.

Block 94 illustrates a determination of whether or not textual or numeric data, representing programming information is present within the captured video frame, and if not, the process passes to block 96 which illustrates the generation of a message to the user, via data processing system 34, indicating that no barcode , textual or numeric data was present within the captured video frame. Thereafter , as illustrated at block 98, the process terminates.

Referring again to block 94, in the event numeric or textual data is present within the captured video frame, the process passes to block 102. Block 102 illustrates the reading of the textual and/or numeric data utilizing any well known optical character recognition process. As may be appreciated by those having skill in this art, a user may utilize mouse 38, or any other suitable means, to graphically depict a particular region of a video frame for optimal character recognition, greatly enhancing the efficiency of the process. Thereafter, after either reading a bar code within the captured video frame or utilizing an optical character recognition process to extract text and/or numeric data from the captured video frame the process passes to block 104.

Block 104 illustrates a determination of whether or not a verification display of the captured video frame is desired. If so, the process passes to block 106 which depicts the display of the extracted text and/or numeric information from the captured video frame and the process then passes to block 108. Block 108 illustrates a determination of whether or not the extracted textual and/or numeric data is correct and if not, the process passes to block 110. Block 110 illustrates the correction of the captured textual and/or numeric data by the user utilizing mouse 38 and/or keyboard 36 of data processing system 34 (see Figure 1) in a manner well known in the art . For example, a user may select a particular numeral and automatically increment or decrement that numeral to provide correction.

Thereafter, after either correcting the extracted textual and/or numeric data, determining that the extracted textual and/or numeric data was correct, or after declining a verification display of the extracted textual and/or numeric data, a s determined at block 104, the process passes to block 112. Block 112 illustrates a determination of whether or not the user desires to store the extracted data wit h the stored video image corresponding to the captured video frame and if so, the process passes to block 114.

Block 114 illustrates the storing of the extracted textual and/or numeric data with the image and thereafter, or after declining to store the extracted textual and/or numeric data with the image, the process passes to block 118 as depicted through block 116. Block 118 illustrates a determination of whether or not a VCR is to be programmed. If a determination is made that a VCR is not to be programmed , the process terminates as depicted at block 120. Referring again to block 118, if a determination is made that a VCR is to programmed, the process passes to block 1 22. Block 122 depicts the sending of programming information to a program device. A program device may be either a VCR or a device capable of generating programming commands for programming a VCR.

Thereafter, the process passes to block 124 which illustrates a determination of whether or not the request is acceptable. A request may be unacceptable, for example, if the time of the selected program is to be broadcast conflicts with t he time a previously selected program is to be broadcast. If a determination is made that the request is not acceptable, the process passes to block 126 which depicts a determination of whether or not a user has requested a modification of the programming information. If a determination is made that a user has not requested a modification, the process terminates as depicted at block 120. Referring again to block 126, if a determination is made that a user has requested a modification, the process passes to block 128 which illustrates a modification by a user of the programming information. Thereafter, the process again passes to block 118.

Referring again to block 124, if a determination is made that the request i s acceptable, the process passes to block 130 which depicts the registration of programming information with a program device. Thereafter, the process passes t o block 132 which illustrates the notification to a user of acceptance of the programming information. The process then terminates as depicted at block 120.

Upon reference to the foregoing those skilled in the art will appreciate that the Applicants herein have create a novel method and system whereby visually perceptible data within a broadcast video signal, such as programming information, may be captured by digitizing a selected video frame within the broadcast video signal and thereafter extracting programming information from that video frame, utilizing optical character recognition processes or barcode scanning techniques, in the e vent a barcode is transmitted in association with the broadcast video signal. That information is then extracted from the captured video frame and stored, in conjunction with the captured video frame, to automatically program a VCR utilizing data processing system 34.

## Claims

1. A method for utilizing visually perceptible data included within broadcast video signals, said visually perceptible data including programming information, said method comprising the steps of:
transmitting a broadcast video signal comprising a plurality of video frames, wherein at least certain of said plurality of video frames include said programming information;
receiving said broadcast video signal;
selectively capturing and storing within a data processing system at least one video frame within said received broadcast video signal which includes said programming information within; and
processing said stored at least one video frame within said data processing system to extract said programming information; and
said method being characterized in that it further includes
accessing said extracted programming information to automatically program a video cassette recorder utilizing said data processing system.

2. The method according to Claim 1, wherein said step of transmitting a broadcast video signal comprising a plurality of video frames, wherein at least certain of said plurality of video frames include said programming information further comprises the step of transmitting a broadcast video signal comprising a plurality of video frames wherein at least certain of said plurality of video frames include an optically recognizable broadcast date.

3. The method for automatically programming a video cassette recorder utilizing visually perceptible data included within broadcast video signals according to Claim 2, wherein said step of processing said stored at least one video frame to extract said programming information comprises the step of scanning said stored at least one video frame utilizing an optical character recognition process to extract said broadcast date from said stored at least one video frame.

4. The method according to Claim 1, wherein said step of transmitting a broadcast video signal comprising a plurality of video frames, wherein at least certain of said plurality of video frames include said programming information further comprises the step of transmitting a broadcast video signal comprising a plurality of video frames wherein at least certain of said plurality of video frames include programming information comprising a visual barcode corresponding to a broadcast date.

5. The method according to Claim 4, wherein said step of processing said stored at least one video frame to extract said programming information comprise s the step of scanning said stored at least one video frame utilizing a barcode reader process to extract said broadcast date from said stored at least one video frame .

6. The method according to Claim 1, wherein said step of transmitting a broadcast video signal comprising a plurality of video frames, wherein at least certain of said plurality of video frames include said programming information further comprises the step of transmitting a broadcast video signal comprising a plurality of video frames wherein at least certain of said plurality of video frames include an optically recognizable broadcast time.

7. The method according to Claim 6, wherein said step of processing said stored at least one video frame to extract said programming information comprises the step of scanning said stored at least one video frame utilizing an optical character recognition process to extract said broadcast time from said stored at least one video frame.

8. The method according to Claim 1, wherein said step of transmitting a broadcast video signal comprising a plurality of video frames, wherein at least certain of said plurality of video frames include said programming information further comprises the step of transmitting a broadcast video signal comprising a plurality of video frames wherein at least certain of said plurality of video frames include programming information comprising a visual barcode corresponding to a broadcast time.

9. The method according to Claim 8, wherein said step of processing said stored at least one video frame to extract said programming information comprise s the step of scanning said stored at least one video frame utilizing a barcode reader process to extract said broadcast time from said stored at least one video frame .

10. The method according to Claim 1 further comprising the step of associating a graphical image with said programming information.

11. A system for automatically programming a video cassette recorder utilizing visually perceptible data included within broadcast video signals, said visually perceptible data including programming information, comprising:
means for transmitting a broadcast video signal comprising a plurality of video frames, wherein at least certain of said plurality of video frames include said programming information;
means for receiving said broadcast video signal;
means for selectively capturing and storing within a data processing system at least one video frame within said received broadcast video signal which includes said programming information within;
means for processing said stored at least one video frame within said data processing system to extract said programming information; and
means for accessing said extracted programming information to automatically program a video cassette recorder utilizing said data processing system.
